Europäisches Patentamt

European Patent Office

Office européen des brevets

(19)

(11) Veröffentlichungsnummer: **0 250 710**

**A2**

(12) **EUROPÄISCHE PATENTANMELDUNG**

(21) Anmeldenummer: 87102748.8

(22) Anmeldetag: 26.02.87

(51) Int. Cl.³: **C 01 B 25/46**
**C 01 G 11/02**

(30) Priorität: 04.07.86 DE 3622597

(43) Veröffentlichungstag der Anmeldung:
07.01.88 Patentblatt 88/1

(84) Benannte Vertragsstaaten:
AT BE DE FR GB IT NL SE

(71) Anmelder: Chemische Fabrik Budenheim Rudolf A.
Oetker
Am Rhein 6
D-6501 Budenheim(DE)

(72) Erfinder: Beltz, Klaus, Dr. rer. nat.
Schillerstrasse 13
D-6501 Budenheim(DE)

(72) Erfinder: Frankenfeld, Klaus, Dr.
Mainzer Landstrasse 48
D-6257 Hünfelden 1(DE)

(72) Erfinder: Ruschke, Peter, Dr.
Eaubonner Strasse 56
D-6501 Budenheim(DE)

(72) Erfinder: Eich, Gerhard
Hallgartner Strasse 34
D-6507 Ingelheim(DE)

(54) Verfahren zur Fällung und Abtrennung von Cadmiumsulfid aus den Raffinaten der Phosphorsäurereinigung.

(57) Die vorliegende Erfindung beschreibt ein Verfahren zur Fällung und Abtrennung von Cadmiumsulfid aus den Raffinaten der Phosphorsäurereinigung, indem man die Cadmium enthaltenden Raffinatströme mit einer $H_2S$ enthaltenden Lösungsmittelphase in einer Mischabsetzerapparatur behandelt, die Raffinatphase von der Cadmiumsulfid enthaltenden Lösungsmittelphase trennt und aus der Lösungsmittelphase das ausgefällte Cadmiumsulfid isoliert. Mit Hilfe des Verfahrens können die Raffinate in einfacher Weise entcadmiert werden, da deren stoffbedingte Eigenschaften ohne Einfluß auf die Fällung und Abtrennung des Cadmiumsulfids bleiben.

EP 0 250 710 A2

Verfahren zur Fällung und Abtrennung von Cadmiumsulfid aus den Raffinaten der Phosphorsäurereinigung

Die vorliegende Erfindung beschreibt ein Verfahren zur
Fällung und Abtrennung von Cadmiumsulfid aus den Raffinaten
der Phosphorsäurereinigung.

In den letzten Jahrzehnten sind eine Reihe von Verfahren
zur Reinigung von Naßverfahrensphosphorsäure durch Lösungsmittelbehandlung bekannt geworden. Einige dieser Verfahrensvorschläge haben Anwendung in der industriellen Praxis
gefunden. Phosphorsäurereinigungsverfahren werden seit
Jahren erfolgreich im großindustriellen Maßstab betrieben.

Bei all diesen Verfahren wird die Naßverfahrensphosphorsäure in zwei Produktionsströme aufgespalten: in den
Reinsäurestrom und in den Raffinatstrom. Letzterer enthält neben einer kleinen Menge Phosphorsäure die Summe
aller Begleitstoffe aus der Naßsäure und gegebenenfalls
andere Hilfsstoffe, die im Verlauf des Reinigungsprozesses
Eingang in das Verfahren gefunden haben. Es handelt sich
dabei um Alkali- oder Ammoniumverbindungen. In den Raffinaten liegen die kationischen Begleitstoffe in konzentrierter,
wasserarmer Form als Phosphat-, Sulfat- oder Fluoridsalze
vor.

Die Raffinate sind wertvolle Nebenprodukte, die durch
ihren Phosphatgehalt und den Gehalt an Spurenelementen als
Beischlagstoffe in der Düngemittelindustrie Verwendung.
finden.

Entsprechend der $P_2O_5$-Ausbeute im Phosphorsäurereinigungs-verfahren sind die einzelnen Stoffe aus der Naßsäure in dem Raffinat angereichert. Filtersäuren, die aus marinen Phosphat-Sedimenten gewonnen werden, haben einen kleinen, im Bereich von 5 bis 50 ppm liegenden Gehalt an Cadmium. Er ist von der Spezies des Rohphosphates abhängig und unterliegt einer breiten Schwankung.

In letzter Zeit ist man bemüht, den Cadmiumeintrag im Boden durch Phosphatdünger zu minimieren. Die Cadmiummengen aus den Raffinaten sind relativ klein, doch stellen sie in der angereicherten Form ein wichtiges Qualitätsmerkmal bei der Beurteilung ihrer Verwendungsfähigkeit als Düngemittelkomponente dar.

In den letzten Jahren sind eine Reihe von Verfahren bekannt geworden, die die Verminderung des Cd-Gehalts in den Phosphatdüngemitteln zum Ziel haben. Diese Verfahren lassen sich nach ihrer Anwendung in zwei Gruppen unterteilen:

Bei der einen Gruppe wird die Abreicherung des Cadmiums im Rohphosphat vorgenommen.

Bei der anderen Gruppe von Verfahren wird die Entfernung des Cadmiums in der Säure durchgeführt.

Keines dieser Verfahren ist auf das Problem der Cadmiumentfernung aus Raffinaten der Phosphorsäurereinigung anwendbar, da die physikalischen und chemischen Eigenschaften der Stoffe weder mit denen einer Phosphorsäure noch denen eines Rohphosphates vergleichbar sind. Zu dem speziellen Problem der Cadmiumentfernung aus den Raffinaten der Phosphorsäurereinigung ist bisher noch kein technischer Lösungsvorschlag bekannt geworden.

Die Raffinate aus der Phosphorsäurereinigung sind sehr komplexe Salzgemische, die sich aus den gelösten und festen Begleitstoffen der Naßverfahrens-Phosphorsäure zusammensetzen. Sie enthalten je nach dem Phosphorsäurereinigungsverfahren einen mehr oder minder großen Anteil an freier Säure. Ihre Gesamtabsättigung liegt im Bereich zwischen der 0,5- bis 0,9-basigen Stufe. Der $P_2O_5$-Gehalt liegt im Bereich von 25 bis 40 Gewichtsprozenten.

Der Wassergehalt in Raffinaten liegt im Bereich von 20 bis 30 Gewichtsprozenten. Sie sind ein Gemisch einer Vielzahl von Salzpaaren und bilden deshalb eine stark übersättigte Lösung mit einer Tendenz zur Kristallisation. Die Raffinate enthalten einen gewissen Anteil an Feststoffen, die als mikrokristalline Körper in der umgebenden hochviskosen Lösung eingebettet sind.

Die Viskosität der Raffinate liegt normalerweise im Bereich von 100 bis 1000 mPas. Höher viskose Raffinate sind ebenfalls bekannt. Das spezifische Gewicht liegt im Bereich von 1,5 bis 1,7 kg/l.

Je nach der Herkunft des für die Herstellung der Naßsäure verwendeten Rohphosphates und der Ausbeute des Säurereinigungsverfahrens kann der Cadmiumgehalt in den Raffinaten im Bereich von 20 bis 350 ppm liegen.

Die Cadmiumentfernung aus Phosphorsäuren durch $H_2S$-Fällung ist in der Patentliteratur beschrieben.

Nach der DE-OS 2422 902 ist es möglich, aus höher konzentrierten Phosphorsäuren mit einem $P_2O_5$-Gehalt von mehr als 45 Gewichtsprozenten unter einem Druck bis zu 50 atü und einer Verweilzeit bis zu 3 Stunden Cadmium aus Phosphorsäure auszufällen. Die Beispiele zeigen, daß ein Restwert von 10 bis 90 %, bezogen auf den Einsatzwert des Cadmiums, in der Säure verbleibt. Der Rest-Cd-Gehalt in der Säure ist von dem $H_2S$-Druck und der Einwirkungszeit abhängig. Die Abtrennung des Sulfidniederschlages erfolgt durch Filtration unmittelbar nach der Druckbegasung in Gegenwart des hohen $H_2S$-Gehaltes. Nach der Filtration wird durch aufwendige technische Maßnahmen der $H_2S$-Gehalt aus der Phosphorsäure entfernt.

Die japanische Patentschrift 75 75.115 beschreibt ebenfalls ein $H_2S$-Druckbegasungsverfahren für die Entfernung von Cadmium aus einer Säure mit 28 % $P_2O_5$. Die $H_2S$-Zuführung erfolgt in der Form einer konzentrierten $Na_2S$-Lösung. Aus dem Beispiel ergibt sich eine $H_2S$-Konzentration von 0,21 Gew.% in der Säure; daraus resultiert ein Druck von 1,4 atü. Die ausgefällten Sulfide werden unmittelbar nach der Begasung aus der $H_2S$-haltigen Säure abfiltriert.

In der japanischen Patentschrift 78 75.196 wird ein Verfahren zur gemeinsamen Verminderung des $SO_4$-Gehaltes und der Schwermetalle in einer 70 %igen Phosphorsäure durch die Behandlung mit Calciumhydroxyd in Verbindung mit einer wäßrigen $Na_2S$-Lösung beschrieben. Es wird ein 25-facher $H_2S$-Überschuß, berechnet auf den Schwermetallgehalt, angewendet. Nach 1 Stunde Reaktionszeit erfolgt die Filtration der Säure.

Die schwedische Patentanmeldung 7904 135-6 beschreibt ebenfalls eine Methode zur Reinigung der Phosphorsäure von Schwermetallen durch Sulfidfällung. Ein Teil der Schwefelsäure wird durch Calciumhydroxid in Gips übergeführt; die freie Säure wird durch die Zugabe von Alkali abgestumpft. Die ausgefällten Sulfide werden durch Filtration aus der Säure entfernt.

Bei all den bekannten Sulfid-Fällungsverfahren werden die ausgefällten Sulfide durch Filtration aus der behandelten Phosphorsäure entfernt. Es ist bekannt, daß die Filtration von Sulfidniederschlägen im technischen Maßstab große Schwierigkeiten bereitet, da die Sulfidniederschläge auf den Filterelementen sehr dichte Beläge bilden, die zu sehr kleinen Filtrationsraten führen.

Das beanspruchte erfindungsgemäße Verfahren ist ebenfalls ein Sulfid-Fällungsverfahren. Im Gegensatz zu den bekannten Verfahren wird die Sulfidfällung jedoch nicht in den schwermetallhaltigen wäßrigen Medien vorgenommen, sondern in einer $H_2S$-haltigen Lösungsmittelphase, die selbst nicht mit der wäßrigen Phase mischbar ist.

Mit Hilfe des beanspruchten Verfahrens können die Raffinate aus der Phosphorsäurereinigung in einfacher Weise entcadmiert werden, da die stoffbedingten Eigenschaften der Raffinate ohne Einfluß auf die Fällung und Abtrennung des Cadmiumsulfids bleiben. Das erfindungsgemäße Verfahren ist dadurch gekennzeichnet, daß man die Cadmium enthaltenden Raffinatströme mit einer $H_2S$-haltigen Lösungsmittelphase in einer geschlossenen Mischabsetzerapparatur behandelt, die Raffinatphase von der Cadmiumsulfid enthaltenden Lösungsmittelphase trennt und aus der Lösungsmittelphase das ausgefällte Cadmiumsulfid isoliert.

Überraschenderweise wurde gefunden, daß bei der Behandlung eines cadmiumhaltigen Raffinates mit einer $H_2S$-haltigen, nicht mischbaren Lösungsmittelphase die Ausfällung des Sulfides nicht, wie nach dem Stand der Technik zu erwarten, in dem Raffinat erfolgt, sondern in der Lösungsmittelphase stattfindet.

Bringt man eine cadmiumhaltige Raffinatphase mit einer $H_2S$-haltigen Lösungsmittelphase durch intensives Rühren in Kontakt, dann wandern die Cadmiumionen aus der Raffinatphase in die Lösungsmittelphase und werden dort als Sulfide ausgefällt. Durch die Fällungsreaktion wird ständig das Verteilungsgleichgewicht der Cadmiumionen zwischen der Raffinat- und der Lösungsmittelphase gestört. Dies führt zu einer nahezu quantitativen Abreicherung des Cadmiums aus der Raffinatphase bei der Anwendung von nur einer Umsetzungsstufe. Das Verfahren wird deshalb in einer einstufigen Mischabsetzerapparatur durchgeführt. Mehrstufige Gegenstromapparaturen sind nicht erforderlich.

Bei dem Mischprozeß werden die ausgefällten Sulfidpartikel in der Lösungsmittelphase suspendiert. Bei dem Auftrennen des Reaktionsgemisches scheidet sich zunächst die Raffinatphase ab und wird als Unterphase von der Lösungsmittelphase getrennt. Aus der isolierten und beruhigten Lösungsmittelphase scheiden sich anschließend durch Sedimentation die ausgefällten Sulfide als Bodenkörper ab, der von der überstehenden Lösungsmittelphase isoliert wird.

Es war weiterhin überraschend, daß bei dem Betrieb des erfindungsgemäßen Verfahrens keine nennenswerten $H_2$S-Konzentrationen in den behandelten Raffinaten auftreten. Der $H_2$S-Gehalt in den Raffinaten liegt im Bereich von 0,001 bis 0,003 % und ist damit um den Faktor ca. 100 niedriger als bei den dem Stand der Technik entsprechenden $H_2$S-Fällungsverfahren. Eine Nachbehandlung der Raffinatphase zur Reduzierung des $H_2$S-Gehaltes ist nicht erforderlich.

Das erfindungemäße Verfahren wird mit einer Lösungsmittelphase durchgeführt, die folgende Bedingungen erfüllen muß:

Sie darf nicht mit der Raffinatphase mischbar sein.
Sie muß eine Löslichkeit für $H_2$S haben und darf bei der Behandlung der Raffinatphase nicht deren physikalische Eigenschaften verändern.

Als organische Lösungsmittel sind organische Verbindungen, die bis zu 6 Kohlenstoffatome und mindestens ein Sauerstoffatom haben, geeignet. Das erfindungsgemäße Verfahren ist durchführbar mit einwertigen Alkoholen, Ketonen wie zum Beispiel Methylisobutylketon, mit Äthern wie zum Beispiel Diisopropyläther. Als besonders brauchbar haben sich Alkohole mit bis zu 5 Kohlenstoffatomen oder deren Mischungen erwiesen. Als eine weitere wesentliche Komponente hat die Lösungsmittelphase einen Gehalt an wäßriger Phosphorsäure, der im Löslichkeitsgleichgewicht mit der Raffinatphase steht und nicht die physikalischen Eigenschaften der Raffinatphasewährend der Behandlung verändert.
Besonders vorteilhaft sind Lösungsmittelphasen, deren Zusammensetzung aus der gleichen Lösungsmittelkombination besteht wie die Lösungsmittelphase in dem entsprechenden Phosphorsäurereinigungsverfahren, bei dem die zu behandelnde Raffinatphase anfällt.

Der H$_2$S-Gehalt in der Lösungsmittelphase liegt im Bereich von 0,1 bis 2 %. Vorzugsweise wird mit einer H$_2$S-Konzentration zwischen 0,1 bis 0,5 gearbeitet.

Das Mengenverhältnis der Raffinatphase zu der Lösungsmittelphase wird von der Menge der auszufällenden Sulfide bestimmt. Bei einem hohen Cadmiumgehalt in dem Raffinat ist eine größere Menge an Lösungsmittelphase erforderlich, um darin die gefällten Sulfide zu suspendieren. Bei einem kleineren Cadmiumgehalt in dem Raffinat vermindert sich entsprechend der erforderliche Mengenanteil der Lösungsmittelphase. Bei einem Cadmiumgehalt von ca. 80 ppm in den Raffinat ist ein Verhältnis von 1,0 Gewichtsteilen Raffinatphase zu 0,2 Gewichtsteilen Lösungsmittelphase ausreichend, um zu einer 95 %igen Abreicherung des Cadmiums zu kommen. Bei gleichbleibendem Cadmiumgehalt in dem Raffinat führt eine Verminderung der Lösungsmittelphase zu einer Verschlechterung der Abreicherungsrate. Eine Vergrößerung der Lösungsmittelphase hat keine negativen Auswirkungen auf die Abreicherungsrate.

Die Rührzeiten zur erschöpfenden Ausfällung des Cadmiumsulfids liegen im Bereich von ca. 5 bis 30 Minuten. Die Rührzeiten sind von der Wirksamkeit des Rührers und der Viskosität des Raffinats abhängig.

Das Auftrennen der Phasen bereitet keinerlei Schwierigkeiten, da große Unterschiede in den Dichten der Phasen bestehen und die Lösungsmittel nicht zur Emulsionsbildung neigen.

Das erfindungsgemäße Verfahren wird üblicherweise im Temperaturbereich zwischen 20 - 40 °C betrieben. Versuche haben gezeigt, daß bei Betriebstemperaturen um 0 °C die Abreicherungsrate um ca. 15 % relativ absinkt, als Folge der verminderten Wanderungsgeschwindigkeit der Cadmiumionen in dem Raffinat, bedingt durch den Anstieg der Viskosität.

Das erfindungsgemäße Verfahren wird in der Regel als ein einstufiger Misch- und Trennprozeß betrieben. Dieser kann sowohl chargenweise als auch in kontinuierlicher Betriebsform durchgeführt werden. Der Chargenbetrieb ist die bevorzugte Arbeitsweise, da alle Misch- und Trennoperationen in einem Reaktor durchgeführt werden und der technische Aufwand klein ist.

Die praktische Durchführung des erfindungemäßen Verfahrens im technischen Maßstab erfolgt in der wie folgend beschriebenen Weise, ohne jedoch das erfindungsgemäße Verfahren auf diese Ausführungsform zu beschränken.

In einem geschlossenen Rührreaktor wird eine aus einem Vorratstank entnommene abgewogene Menge eines cadmiumhaltigen Raffinats aus der Phosphorsäurereinigung mit einer abgewogenen Menge einer $H_2S$-haltigen Lösungsmittelphase zusammengebracht und ca. 20 Minuten lang intensiv durchgemischt. Nach dem Stillsetzen des Rührwerks wird nach einer Verweilzeit von ca. 30 Minuten die behandelte Raffinatphase durch den Bodenablauf abgezogen und der Weiterverarbeitung zugeführt. Nach einer folgenden Sedimentationszeit von ca. 30 Minuten wird der sulfidische Bodenkörper von der Lösungsmittelphase über den Bodenablauf abgetrennt, getrocknet und einer Deponie zugeführt. Anschließend wird die cadmiumfreie Lösungsmittelphase in ein Vorlagegefäß abgelassen und nach Ergänzung des $H_2S$-Verbrauchs erneut für einen folgenden Fällungsprozeß verwendet. Die Trennoperationen werden in bekannter Weise meßtechnisch überwacht.

In der folgenden Tabelle sind als Beispiele die Versuchsergebnisse zusammengefaßt.

| Beisp. | Raffinatphase Einlauf | | | | Lösungsmittelphase Einlauf | | | | Raffinatphase Auslauf | | |
|---|---|---|---|---|---|---|---|---|---|---|---|
| | Menge kg | Viskosit. mPas(20°) | Cd-Geh. ppm | Temp. °C | Menge kg | LM-Typ | $P_2O_5$ % | $H_2S$ % | Cd-Geh. ppm | $H_2S$ ppm | Abreicher. % v.E. |
| 1 | 1005 | 320 | 72 | 28 | 202 | IPA | 16,2 | 0,1 | 4 | 23 | 94,4 |
| 2 | 1021 | 684 | 84 | 20 | 165 | IPA | 15,2 | 0,2 | 5 | 11 | 94,0 |
| 3 | 985 | 410 | 69 | 35 | 95 | IPA | 16,7 | 0,3 | 6 | 29 | 91,3 |
| 4 | 1010 | 105 | 57 | 35 | 253 | n.BuOH | 13,4 | 0,2 | 2 | 13 | 96,5 |
| 5 | 1003 | 850 | 76 | 38 | 201 | n.BuOH | 16,9 | 0,3 | 3 | 18 | 96,1 |
| 6 | 1005 | 507 | 81 | 20 | 152 | i.BuOH | 17,5 | 0,2 | 4 | 18 | 95,1 |

IPA = Isopropanol

n.BuOH = n-Butanol

i.BuOH = i.Butanol

Chemische Fabrik Budenheim

Rudolf A. Oetker

Budenheim, 30. Juni 1986

Patentansprüche

1) Verfahren zur Fällung und Abtrennung von Cadmiumsulfid aus den Raffinaten der Phosphorsäurereinigung, d a d u r c h   g e k e n n z e i c h n e t , daß man die Cadmium enthaltenden Raffinatströme mit einer $H_2S$ enthaltenden Lösungsmittelphase in einer geschlossenen Mischabsetzerapparatur behandelt, die Raffinatphase von der Cadmiumsulfid enthaltenden Lösungsmittelphase trennt und aus der Lösungsmittelphase das ausgefällte Cadmiumsulfid isoliert.

2) Verfahren nach Anspruch 1), d a d u r c h   g e k e n n - z e i c h n e t , daß die Lösungsmittelphase organische Verbindungen enthält, die bis zu 6 C-Atome und mindestens ein Sauerstoffatom haben, die mit Wasser und Phosphorsäure mischbar bis begrenzt mischbar sind, aber gegenüber der Raffinatphase nicht mischbar sind.

3) Verfahren nach Anspruch 1) und 2), d a d u r c h   g e k e n n z e i c h n e t , daß die Lösungsmittelphase einen oder mehrere Alkohole mit bis zu 5 Kohlenstoffatomen enthält, die mit Wasser und Phosphorsäure mischbar bis begrenzt mischbar sind, aber gegenüber der Raffinatphase nicht mischbar sind.

4) Verfahren nach Anspruch 1) bis 3), d a d u r c h
   g e k e n n z e i c h n e t , daß die Lösungsmittelphase aus der gleichen Lösungsmittelkombination besteht wie die Lösungsmittelphase in dem entsprechenden
   Phosphorsäurereinigungsverfahren.

5) Verfahren nach Anspruch 1) bis 4), d a d u r c h
   g e k e n n z e i c h n e t , daß man aus der cadmiumsulfidhaltigen Lösungsmittelphase das ausgefällte Sulfid
   durch Dekantation, Zentrifugation oder Filtration entfernt.